Europäisches Patentamt

European Patent Office

Office européen des brevets

(11) Veröffentlichungsnummer: **0 331 951**
**A2**

## EUROPÄISCHE PATENTANMELDUNG

(21) Anmeldenummer: 89102835.9

(22) Anmeldetag: 18.02.89

(51) Int. Cl.⁴: **F16F 13/00**

(30) Priorität: 09.03.88 DE 3807789

(43) Veröffentlichungstag der Anmeldung:
13.09.89 Patentblatt 89/37

(84) Benannte Vertragsstaaten:
DE ES FR GB IT SE

(71) Anmelder: **METZELER Gesellschaft mit beschränkter Haftung**
**Gneisenaustrasse 15**
**D-8000 München 50(DE)**

(72) Erfinder: **Sauer, Wolfgang, Dr.**
**Im Gebück 3a**
**D-5412 Ransbach(DE)**
Erfinder: **Sprang, Rüdiger**
**Pappelweg 10**
**D-5205 St. Augustin(DE)**

(74) Vertreter: **Michelis, Theodor, Dipl.-Ing.**
**Gneisenaustrasse 15**
**D-8000 München 50(DE)**

(54) Entkopplungsmembran für hydraulisch dämpfende Mehrkammer-Motorlager.

(57) Bei einer Entkopplungsmembran aus gummielastischem Material für hydraulisch dämpfende Mehrkammer-Motorlager, die in einer Zwischenplatte zwischen den beiden Lagerkammern mit ihrem wulstförmigen Umfangsbereich eingespannt ist, ist zur Kompensation von Zugspannungen in radialer Richtung erfindungsgemäß vorgesehen, daß das zwischen dem wulstförmigen Umfangsbereich und dem zentralen, dickeren Mittelbereich (22) liegende stegförmige Quergelenk (21) in Umfangsrichtung und/oder in Radialrichtung eine wellenförmige Kontur aufweist.

FIG.2

## Entkopplungsmembran für hydraulisch dämpfende Mehrkammer-Motorlager

Die Erfindung bezieht sich auf eine Entkopplungsmembran aus gummielastischem Material für hydraulisch dämpfende Mehrkammer-Motorlager, mit einem wulstförmigen Umfangsbereich, der in einer zwischen den beiden Kammern des Lagers angeordneten Zwischenplatte eingespannt ist, sowie mit einem angenähert gleichdicken Zentralbereich, wobei Umfangs- und Zentralbereich über einen horizontalen, als Quergelenk wirkenden, stegförmigen Bereich miteinander in Verbindung stehen.

Eine derartige Entkopplungsmembran ist beispielsweise aus der US-PS 4 159 091 bekannt. Bei einer derartigen Gestaltung und Anordnung besteht aber die Gefahr, daß bei hohen Drücken in den Lagerkammern die Membran aus ihrer Einbaulage herausgezogen wird, oder aber daß im Bereich des Quergelenkes so hohe Zugspannungen auftreten, daß die Lebensdauer der Membran erheblich herabgesetzt wird.

Der vorliegenden Erfindung liegt daher die Aufgabe zugrunde, die Membran so zu gestalten, daß einerseits die Biegesteifigkeit der Membran zur besseren Entkopplungswirkung herabgesetzt wird und daß andererseits auftretende Zugspannungen sicher beherrscht werden.

Zur Lösung dieser Aufgabe ist erfindungsgemäß vorgesehen, daß der stegförmige Bereich des Quergelenkes in Umfangsrichtung und/oder in Radialrichtung eine wellenförmige Kontur aufweist.

Durch eine derartige Konturierung wird ein Ausgleich für auftretende Zugspannungen geschaffen, ohne daß dabei die Flexibilität der Membran und insbesondere ihres zentralen Bereiches herabgesetzt wird.

Es ist aber zweckmäßig, wenn das Verhältnis von Wellenlänge $\lambda$ der Kontur in Umfangsrichtung und mittlerem Radius R des Quergelenkbereiches zwischen 0 und $\pi$ liegt.

Das Verhältnis von Dicke d des Quergelenkbereiches und der Maximaldicke D der Membran sollte dabei stets größer als 0,1 sein, um eine hohe Lebensdauer unter dynamischer Wechselbeanspruchung zu gewährleisten.

Um darüber hinaus ein Herausziehen radial nach innen der Membran zu verhindern und eine bessere Einspannung zu ermöglichen, ist es ferner zweckmäßig, wenn am Außenumfang ein Haltering aus starrem Material anvulkanisiert ist.

Eine derartige Mambran kann zur Optimierung der Funktion des Lagers noch eine zentrale Bypaßbohrung aufweisen. Es ist aber auch möglich, daß zentral in die Membran eine Tilgermasse eingebettet ist.

Anhand einer schematischen Zeichnung sind Aufbau und Wirkungsweise von Ausführungsbeispielen nach der Erfindung näher erläutert. Dabei zeigen

Fig. 1 einen Längsschnitt durch eine Zwischenplatte mit einer zumindest im Funtionsbereich herkömmlich ausgebildeten, eingespannten Membran,

Fig. 2 einen Längsschnitt durch eine Membran mit Entlastungskontur,

Fig. 3 eine Aufsicht auf die Membran nach Fig. 2,

Fig. 4 einen Schnitt entlang der Entlastungskontur entsprechend der Schnittlinie IV-IV nach Fig. 3,

Fig. 5 eine Membran mit einer zentralen Bypaßbohrung und

Fig. 6 eine Membran mit einer zentralen Tilgermasse.

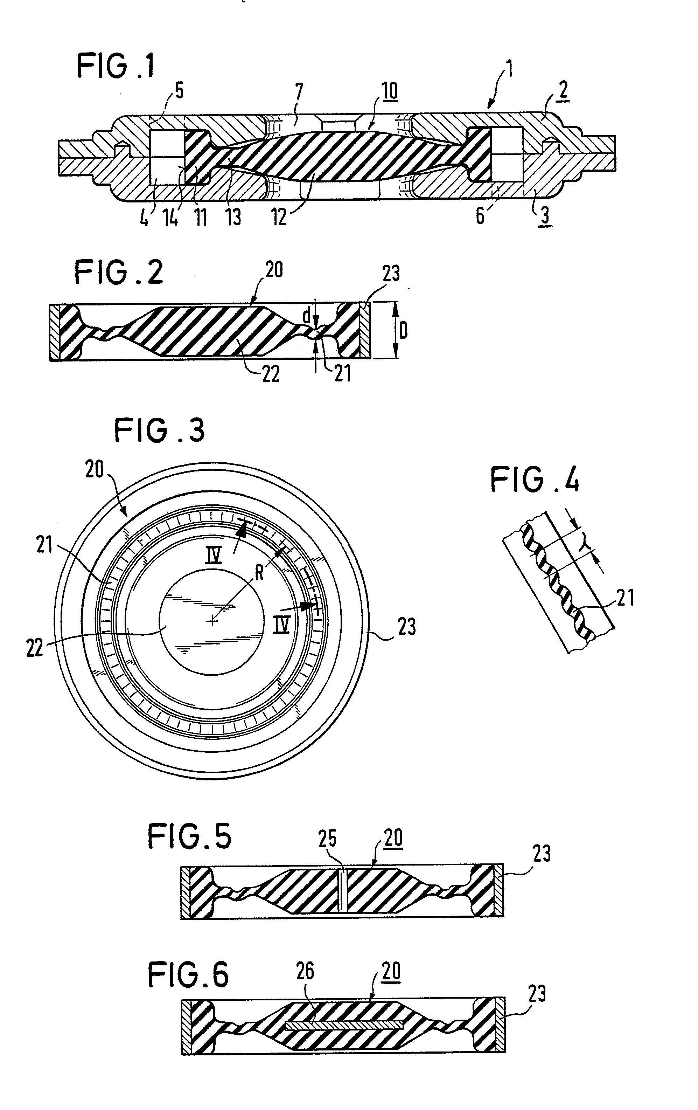

Nach dem in Fig. 1 dargestellten Ausführungsbeispiel besteht die in herkömmlicher Weise in einem Mehrkammer-Motorlager eingebaute Zwischenplatte 1 aus den beiden spiegelbildlich symmetrischen Hälften 2 und 3, in die der ringförmige Überströmkanal 4 mit einem gestrichelt angedeuteten Einlauf 5 und einem Auslauf 6 eingeschnitten sind. Die Zwischenplatte 1 weist eine zentrale durchgehende Öffnung 7 auf, die durch eine Membran 10 aus gummielastischem Material verschlossen ist. Diese Membran 10 besteht aus einem ringförmigen, verdickten Umfangsbereich 11, einem angenähert gleich dicken Zentralbereich 12 und einem als Quergelenk 13 wirkenden stegförmigen Bereich zwischen der Umfangswulst 11 und dem zentralen auslenkbaren Mittelbereich 12. Bei dem dargestellten Ausführungsbeispiel ragt der Umfangsbereich 11 der Membran 10 bis in den Überströmkanal 4 und bildet mit seiner zylindrischen Außenfläche 14 die radial innenliegende Wandung des Kanals 4.

Bei hohen Drücken auf diese Membran 10 besteht nunmehr die Gefahr, daß die Membran 10 so stark ausgelenkt wird, daß der Umfangsbereich 11 aus der Halterung rutscht, oder aber daß das Quergelenk 13 den Dauerbelastungen nicht standhält und abreißt oder bricht.

Um dies zu verhindern, ist entsprechend dem Ausführungsbeispiel nach Fig. 2, 3 und 4 eine Membran 20 geschaffen, deren Quergelenk 21 relativ dünn ausgebildet ist und entsprechend dem in Fig. 2 gezeigten Schnitt eine wellenförmige Kontur in Radialrichtung und/oder auch in Umfangsrichtung entsprechend dem in Fig. 4 dargestellten Schnitt aufweist. Durch diese Konturierung kann sich einerseits das dickere Mittelteil 22 der Membran in Vertikalrichtung über einen größeren Bereich frei bewegen, ohne daß auf das Quergelenk 21 zu große Zugkräfte einwirken. Andererseits werden bei oszillierenden Druckbelastungen auf die Unter- und Oberseite der Membran Zugspannungen durch die wellenförmige Kontur des Quergelenkes 21 verringert.

Für eine optimale Gestaltung der Konturierung des Quergelenks 21 im Umfangsrichtung sollte das Verhältnis von Wellenlänge λ der Kontur und des mittleren Radius R des Quergelenkes 21 zwischen 0 und π liegen.

Um darüber hinaus eine hohe Lebensdauer unter dynamischen Wechselbeanspruchungen zu gewährleisten, sollte das Verhältnis der Dicke d des Quergelenkes zur Gesamtdicke D der Membran stets größer als 0,1 sein.

Zur zusätzlichen Stabilisierung und einer Verhinderung des Herausziehens der Membran 20 aus ihrer Einspannlage in der Zwischenplatte kann am Umfang der Membran 20 noch ein Haltering 23 aus metallischem Werkstoff oder Kunststoff anvulkanisiert sein.

Bei einer derartigen Gestaltung mit einem radial außenliegenden Haltering 23 besteht normalerweise aber die Ge fahr, daß beim Vulkanisationsvorgang Zugspannungen in radialer Richtung im gummielastischen Teil der Membran auftreten, die der dynamischen Belastung stets überlagert sind, was eine geringe Lebensdauer zur Folge hat. Durch die erfindungsgemäße wellenförmige Kontur des Quergelenks 21 werden jedoch diese Zugspannungen beim Vulkanisationsvorgang weitgehend herabgesetzt.

Bei einer derartigen Ausgestaltung der Membran 20 ist es entsprechend dem Ausführungsbeispiel nach Fig. 5 möglich, zusätzlich noch eine zentrale Bypaßbohrung vorzusehen, um die Bandbreite der Dämpfungscharakteristik im niederfrequenten Bereich zu vergrößern.

Ferner ist es entsprechend dem Ausführungsbeispiel nach Fig. 6 auch möglich, zusätzlich noch eine plattenförmige Masse 26 zentrisch in der Membran 20 anzubringen, die als Prinzip der gegenschwingenden Masse eine Frequenzentkopplung in einem speziellen Frequenzbereich bewirkt.

Insgesamt kann also mit einer derartigen Gestaltung der Membran und der Ausbildung des Quergelenks als wellenförmige Kontur sowohl die bei der Vulkanisation auftretende Zugspannung als auch bei Betrieb des Lagers auftretende Zugspannungen durch erhöhte Drücke in den Flüssigkeitskammern so weit abgebaut werden, daß eine Verringerung der Lebensdauer und damit eine Schädigung der Membran sicher vermieden wird.

## Ansprüche

1. Entkopplungsmembran aus gummielastischem Material für hydraulisch dämpfende Mehrkammer-Motorlager, mit einem wulstförmigen Umfangsbereich, der in einer zwischen den beiden Kammern des Lagers angeordneten Zwischenplatte eingespannt ist, sowie mit einem angenähert gleichdicken Zentralbereich, wobei Umfangs- und Zentralbreich über einen horizontalen, als Quergelenk wirkenden stegförmigen Breich miteinander in Verbindung stehen, dadurch gekennzeichnet, daß der stegförmige Bereich des Quergelenks (21) der Membran (20) in Umfangsrichtung und/oder in Radialrichtung eine wellenförmige Kontur aufweist.

2. Entkopplungsmembran nach Anspruch 1, dadurch gekennzeichnet, daß das Verhältnis von Wellenlänge der Kontur des Quergelenks (21) in Umfangsrichtung und mittlerem Radius R des Quergelenks (21) zwischen 0 und liegt.

3. Entkopplungsmembran nach Anspruch 1, dadurch gekennzeichnet, daß das Verhältnis von Dicke d des stegförmigen Bereichs und der Maximaldicke D der Membran (20) größer als 0,1 ist.

4. Entkopplungsmembran nach einem der Ansprüche 1 bis 3, dadurch gekennzeichnet, daß am Außenumfang ein Haltering (23) aus starrem Material anvulkanisiert ist.

5. Entkopplungsmembran nach einem der Ansprüche 1 bis 4, dadurch gekennzeichnet, daß die Membran (20) eine zentrale Bypaßbohrung (25) aufweist.

6. Entkopplungsmembran nach einem der Ansprüche 1 bis 5, dadurch gekennzeichnet, daß zentral in die Membran (20) eine Tilgermasse (26) eingebettet ist.

FIG.1

FIG.2

FIG.3

FIG.4

FIG.5

FIG.6